# EUROPEAN PATENT SPECIFICATION

(11) **EP 4 403 290 B1**
(45) Date of publication and mention of the grant of the patent: **11.06.2025**
(21) Application number: 23216843.5
(22) Date of filing: 14.12.2023
(51) Int. Cl.: B23K 20/10, H01M 50/528, H01M 50/536, H01M 50/566

(54) **METHOD OF PRODUCING BATTERY, AND BATTERY**
VERFAHREN ZUR HERSTELLUNG EINER BATTERIE UND BATTERIE
PROCÉDÉ DE PRODUCTION DE BATTERIE ET BATTERIE

(30) Priority: 17.01.2023 JP 2023005465
(43) Date of publication of application: 24.07.2024
(73) Proprietor: TOYOTA JIDOSHA KABUSHIKI KAISHA, Toyota-shi, Aichi-ken, 471-8571 (JP)
(72) Inventor: KAKISHITA, Kenichi, Toyota-shi 471-8571 (JP)
(74) Representative: D Young & Co LLP

(56) References cited:
- JP-A- 2022 073 690

## Description

### BACKGROUND

### Technical Field

The present disclosure relates to a method of producing a battery and to a battery.

### Related Art

In a battery having a terminal and an electrode body that has a current collector, a method of electrically joining the current collector and the terminal by joining an end portion of the current collector to one surface of a side face member has conventionally been carried out.

For example, Japanese Patent Application Laid-Open (JP-A) No. 2022-073690 discloses an ultrasonic j oining method of joining a current collector terminal and plural current collector foils that have been layered, in which method the current collector terminal has plural recess portions formed at a surface thereof that faces the current collector foils, and in which the plural current collector foils that are layered and the current collector terminal are welded and joined together by ultrasonic joining.

### SUMMARY

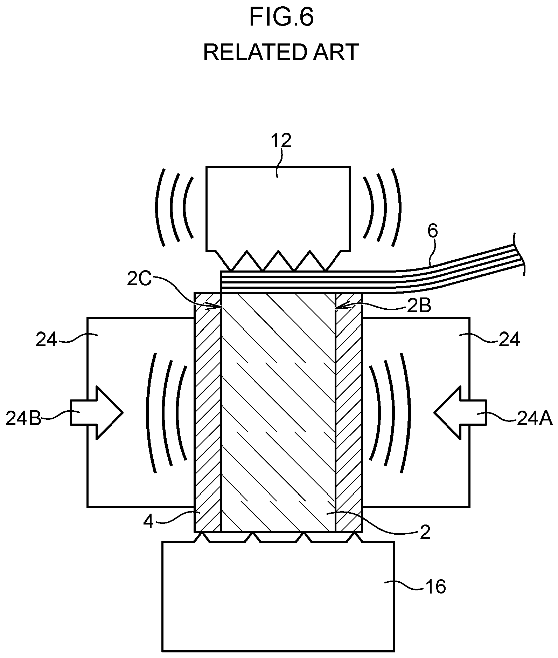

When a current collector and a side face member that includes a terminal are joined, as illustrated in Fig. 6 for example, a current collector 6 is placed so as to contact a side face member 2, a horn 12 is pushed against the current collector 6, and the current collector 6 is joined to the side face member 2 due to ultrasonic vibrations being applied from the horn 12. At this time, the side face member 2 is fixed due to a pair of clamps 24 that serve as pressers being pushed against tab films 4 and thereby grasping a pair of side faces 2B, 2C of the side face member 2. Here, the clamps 24, whose surfaces that are pushed against the tab films 4 are flat, are conventionally used. However, there are cases in which the ultrasonic vibrations are not transmitted well to the interface between the current collector and the joining face of the side face member, and the joining performance is poor.

The present disclosure was made in view of the above-described circumstances, and provides a method of producing a battery, and a battery, having excellent joining performance of a current collector and a side face member.

A first aspect of the present disclosure provides a method of producing a battery that includes:
an electrode body including a current collector;
a side face member including a terminal and disposed at a side face of the electrode body, the side face member having a joining face that is ultrasonically joined to the current collector, and a pair of side faces adjacent to the joining face; and
resin layers disposed at surfaces of the pair of side faces of the side face member,
the method including a joining step of ultrasonically joining the current collector to the joining face of the side face member,
wherein the joining step includes performing ultrasonic joining while grasping, via the resin layers, the pair of side faces of the side face member by a pair of clamps having plural projections, and
the grasping is carried out such that the projections of the clamps penetrate through the resin layers and contact the pair of side faces.

A second aspect of the present disclosure provides the method of producing a battery according to the first aspect, in which
the battery includes a laminate sheet covering the electrode body and the side face member,
the grasping in the joining step includes forming holes in the surfaces of the pair of side faces by the projections of the clamps,
the method further includes, after the joining step, a thermal fusing step of thermally fusing the laminate sheet to the side face member, and
a resin of the resin layers penetrates into the holes after the thermal fusing step.

A third aspect of the present disclosure provides a battery including:
an electrode body including a current collector;
a side face member including a terminal and disposed at a side face of the electrode body, the side face member having a joining face that is ultrasonically joined to the current collector, and a pair of side faces adjacent to the joining face;
resin layers disposed at surfaces of the pair of side faces of the side face member; and
a laminate sheet covering the electrode body and the side face member, and thermally fused to the side face member,
in which the side face member has plural holes in the pair of side faces, and a resin of the resin layers penetrates into the holes.

In accordance with the present disclosure, there can be provided a method of producing a battery, and a battery, having excellent joining performance of a current collector and a side face member.

### BRIEF DESCRIPTION OF THE DRAWINGS

Fig. 1 is a schematic sectional view for explaining respective steps of a method of producing a battery in an embodiment of the present disclosure;
Fig. 2 is a schematic sectional view for explaining respective steps of the method of producing a battery in the embodiment of the present disclosure;
Fig. 3 is a schematic sectional view for explaining respective steps of the method of producing a battery in the embodiment of the present disclosure;
Fig. 4 is a schematic sectional view for explaining respective steps of the method of producing a battery in the embodiment of the present disclosure;
Fig. 5 is a schematic sectional view for explaining respective steps of the method of producing a battery in the embodiment of the present disclosure;
Fig. 6 is a schematic sectional view for explaining one step of a conventional method of producing a battery;
Fig. 7 is a schematic perspective view illustrating only a side face member of a battery in an embodiment of the present disclosure;
Fig. 8 is a schematic plan view illustrating only a side face member of a battery in an embodiment of the present disclosure;
Fig. 9 is a schematic plan view illustrating only a side face member of a battery in an embodiment of the present disclosure;
Fig. 10 is a schematic plan view illustrating only a side face member of a battery in an embodiment of the present disclosure;
Fig. 11 is a schematic sectional view illustrating, in an enlarged manner, a hole formed in a side face member of a battery in an embodiment of the present disclosure;
Fig. 12 is a schematic sectional view illustrating an example of a solid-state battery; and
Fig. 13 is a schematic sectional view for explaining a method of measuring joining strength in the examples.

### DETAILED DESCRIPTION

A battery of the present disclosure is described in detail hereinafter with reference to the drawings. The respective drawings described hereinafter are schematic illustrations, and sizes and shapes of respective portions are exaggerated when appropriate in order to facilitate understanding. Throughout the figures, equivalent members are designated by the same reference numeral, and overlapping explanations thereof may be omitted.

### <Method of Producing Battery>

A method of producing a battery according to an embodiment of the present disclosure is described below.

According to the method of producing a battery, a battery is produced which includes: an electrode body that includes a current collector; a side face member including a terminal and disposed at a side face of the electrode body, the side face member having a joining face that is ultrasonically joined to the current collector, and a pair of side faces adjacent to the joining face; and resin layers disposed on surfaces of the pair of side faces of the side face member. The method of producing a battery includes a joining step of ultrasonically joining the current collector to the joining face of the side face member.

The battery may further include a laminate sheet that covers the electrode body and the side face member and is thermally fused to the side face member. The method of producing a battery may include, after the joining step, a thermal fusing step of thermally fusing the laminate sheet to the side face member.

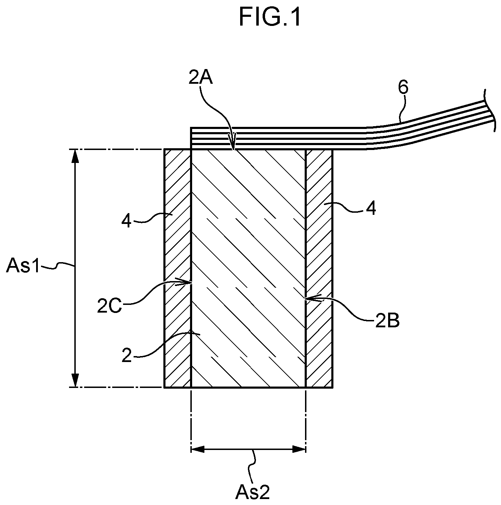

A method of producing a battery according to an embodiment of the present disclosure is described hereinafter with reference to the drawings. Figs. 1 through 5 are schematic sectional views for explaining respective steps of the method of producing a battery according to the embodiment of the present disclosure.

### - Joining Step -

Fig. 1 is a schematic sectional view illustrating a side face member and a current collector before a joining step is carried out. As illustrated in Fig. 1, a side face member 2 that includes a terminal has a joining face 2A that is to be ultrasonically joined to a current collector, and a pair of side faces 2B, 2C that are adjacent to the joining face 2A. Tab films 4 serving as resin layers are disposed at the side face member 2 so as to cover at least portions of the surfaces of the pair of side faces 2B, 2C. An electrode body (not illustrated) includes a current collector 6 having plural layers. Before the joining step, an end portion of the current collector 6 is placed so as to contact the joining face 2A of the side face member 2.

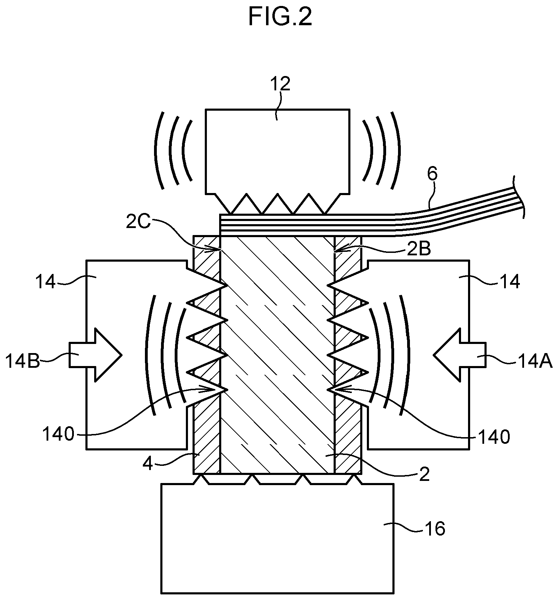

A joining step in a conventional method of producing a battery is described here. Fig. 6 is a schematic sectional view for explaining the joining step in a conventional method of producing a battery. Fig. 2 is a schematic sectional view for explaining the joining step in the method of producing a battery according to the embodiment of the present disclosure.

In the joining step in the conventional method of producing a battery, as illustrated in Fig. 6, a horn 12 is, from a side opposite the side face member 2, pushed against the current collector 6 that has been placed such that an end portion of the current collector 6 contacts the joining face of the side face member 2, and ultrasonic vibrations are applied from the horn 12. The end portion of the current collector 6 is thereby joined to the joining face of the side face member 2. At this time, an anvil 16 serving as a presser is pushed against the surface, which is at the side opposite the joining face, of the side face member 2. Further, a pair of clamps 24 abut on the tab films 4 and thereby serve as pressers for the pair of side faces 2B, 2C of the side face member 2, and respectively apply pressure in the directions of arrow 24A and arrow 24B. The side face member 2 is thereby grasped by the pair of clamps 24.

Note that the joining step of the conventional method of producing a battery uses the clamps 24 at which the surfaces that are pushed against the tab films 4 are flat. In this conventional producing method, even though the side face member 2 is grasped by the pair of clamps 24 through the tab films 4, there are cases in which the ultrasonic vibrations from the horn 12 are not transmitted well to the interface between the current collector 6 and the joining face of the side face member 2 due to the Young's modulus of the tab films 4 being low, and inferior joining performance is obtained.

In contrast, as illustrated in Fig. 2, the method of producing a battery according to the embodiment of the present disclosure uses clamps 14, which have plural projections 140 at the surfaces that are to be pushed against the tab films 4, as the clamps that are used in the joining step. Further, at the time when the side face member 2 is grasped by the clamps 14, a pressure that works in the direction of arrow 14A and a pressure that works in the direction of arrow 14B causes the projections 140 of the clamp 14 to penetrate through the tab films 4 and to contact the pair of side faces. Due thereto, the side face member 2 is fixed well by the clamps 14. Thus, the ultrasonic vibrations from the horn 12 are transmitted well to the interface between the current collector 6 and the joining face of the side face member 2, and an excellent joining performance is obtained. Also in Fig. 2, a horn 12 is, from a side opposite the side face member 2, pushed against the current collector 6 that has been placed such that an end portion of the current collector 6 contacts the joining face of the side face member 2, and ultrasonic vibrations are applied from the horn 12. The end portion of the current collector 6 is thereby joined to the joining face of the side face member 2. At this time, an anvil 16 serving as a presser is pushed against the surface, which is at the side opposite the joining face, of the side face member 2. Further, a pair of clamps 14 abut on the tab films 4 and thereby serve as pressers for the pair of side faces 2B, 2C of the side face member 2, and respectively apply pressure in the directions of arrow 14A and arrow 14B. The side face member 2 is thereby grasped by the pair of clamps 14.

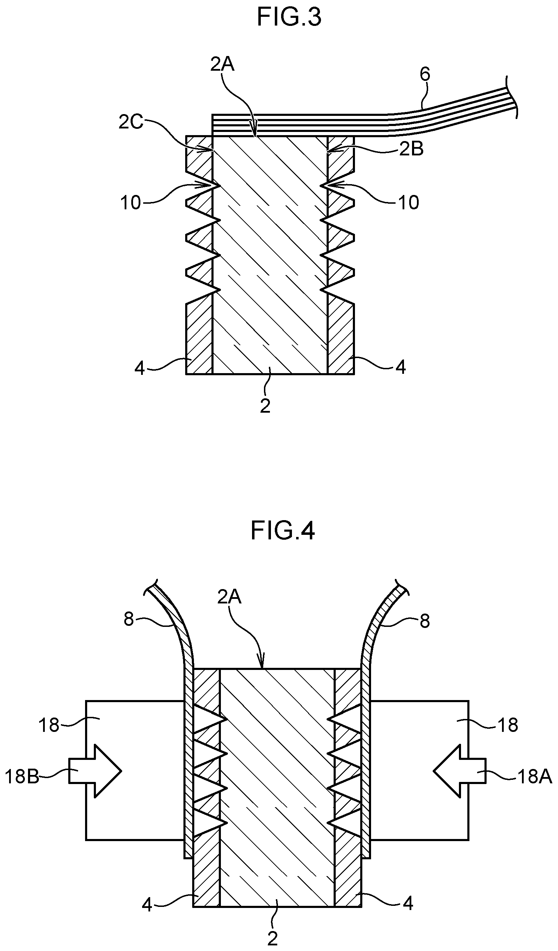

In the joining step of the method of producing a battery according to the embodiment of the present disclosure, at the time when the side face member 2 is grasped by the clamps 14, the projections 140 of the clamps 14 penetrate through the tab films 4, and holes are formed in the surfaces of the pair of side faces 2B, 2C of the side face member 2 by the projections 140 of the clamps 14. Therefore, the side face member 2 after the joining step that is illustrated in Fig. 3 has plural holes 10 in the surfaces of the pair of side faces 2B, 2C.

### - Thermal Fusing Step -

The thermal fusing step that is carried out after the joining step in the method of producing a battery according to the embodiment of the present disclosure is described next.

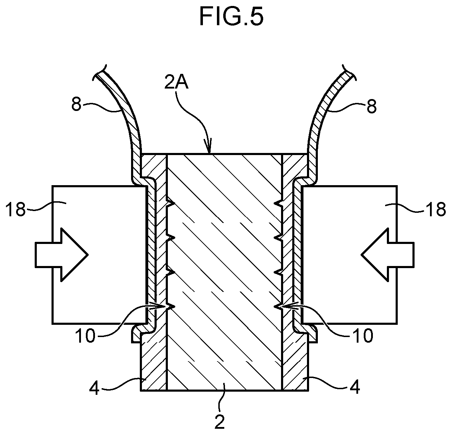

Fig. 4 and Fig. 5 are schematic sectional views for explaining the thermal fusing step of the method of producing a battery according to the embodiment of the present disclosure. Note that, although not illustrated, an end portion of current collector is joined to the joining face 2A of the side face member 2 illustrated in Fig. 4 and Fig. 5, and moreover, an electrode body that is connected to the current collector is disposed at the joining face 2A side (i.e., the upper side in Fig. 4 and Fig. 5) of the side face member 2.

As illustrated in Fig. 4, first, before the thermal fusing step is carried out, a laminate sheet 8 is disposed so as to cover the electrode body (not illustrated) and portions of the side face member 2. Then, a pair of heating bars 18 are made to abut the laminate sheet 8 on the tab films 4 on the pair of side faces 2B, 2C of the side face member 2, and heating is carried out while pressure is applied in the directions of arrow 18A and arrow 18B respectively.
The laminate sheet 8 is thereby thermally fused to the side face member 2 with the tab films 4 disposed therebetween.

At this time, due to the plural holes 10 being formed in the pair of side faces 2B, 2C of the side face member 2, the resin of the tab films 4 that has melted due to the heat from the heating bars 18 flows into the holes 10. Therefore, the resin of the tab films 4 has penetrated into the holes 10 of the side face member 2 after the thermal fusing step. This produces an anchoring effect, which improves the joining strength between the side face member 2 and the tab films 4, and also improves the joining strength between the side face member 2 and the laminate sheet 8, which is thermally fused with the tab films 4 disposed therebetween.

Note that Figs. 1 through 5 illustrate an aspect in which an electrode body (not illustrated) includes the current collector 6 having plural layers. However, the number of the current collector layers of the current collector 6 is not particularly limited, and an aspect may be envisaged in which the current collector includes only one current collector layer.

### · Projections

The projections at the clamps are not particularly limited provided that they can penetrate through the resin layer such as the tab films in the joining step.

For example, the clamp may have, at the surface thereof that is to contact the resin layer that is a tab film or the like, plural projections that are lined-up in one row, or may have plural projections that are lined-up in two rows, or may have plural projections that are lined-up in three or more rows. Note that, from the standpoint of fixing the side face member well in the joining step, it is preferable that the clamp has plural projections that are lined-up in two or more rows.

Further, in a case in which the clamp has plural projections that are lined-up in two or more rows, the projections may be formed uniformly at a region nearer to the joining face at the time of grasping the side face member, and at a region farther from the joining face. However, from the standpoint of obtaining a favorable joining performance in the joining step, it is preferable that the distribution of the projections be concentrated in the region nearer to the joining face.

Further, the plural projections that are lined-up in one or more rows may be formed uniformly from one end to the other end of the clamp, or the projections may have a distribution concentrated in one end portion and the other end portion.

Examples of the shape of the projections include a cone shape (a perfect circle cone shape, an oval cone shape or the like), a triangular cone shape (an equilateral triangular cone shape, a right triangular cone shape or the like), and a quadrangular cone shape (a square cone shape, the shape of a cone whose base is rhomboid, the shape of a cone whose base is rectangular, or the like).

The relationship between the height of the projections and the thickness of the resin layer such as the tab film is important, and the projections should have a height such that the projections can penetrate through the resin layer and contact the side face member. Further, it is preferable that the height of the projections be a height such that the projections can form holes in the surfaces of the side face member well. From these standpoints, the height of the projections is preferably from 100 *µ*m to 2000 *µ*m, and is more preferably from 200 *µ*m to 1000 *µ*m.

Note that the height of a projection means the distance from the non-projection region of the surface of the clamp which surface contacts the resin layer such as a tab film, to the peak of the projection in the direction orthogonal to that surface.

From the standpoint of fixing the side face member well in the joining step, the interval between the projections (i.e., the pitch) is preferably from 0.2 mm to 4 mm, and is more preferably from 0.4 mm to 2 mm.

Note that the interval between projections means the distance between the peaks of adjacent projections. The distance between adjacent projections is measured for each of adjacent projection pairs that the clamp has, and the average value thereof is used as the interval between the projections.

### <Battery>

The battery according to an embodiment of the present disclosure includes: an electrode body that includes a current collector; a side face member that includes a terminal and that is disposed at a side face of the electrode body, wherein the side face member has a joining face that is ultrasonically joined to the current collector, and a pair of side faces adjacent to the joining face; resin layers disposed on surfaces of the pair of side faces of the side face member; and a laminate sheet that covers the electrode body and the side face member and is thermally fused to the side face member. Further, the side face member has plural holes 10 in the pair of side faces, and the resin of the resin layers penetrates into these holes.

This configuration improves, through an anchoring effect, the joining strength between the side face member and each resin layer, and also improves the joining strength between the side face member and the laminate sheet, which is thermally fused with the resin layer disposed therebetween.

### • Holes

The holes 10 at the side face member of the battery are not particularly limited.

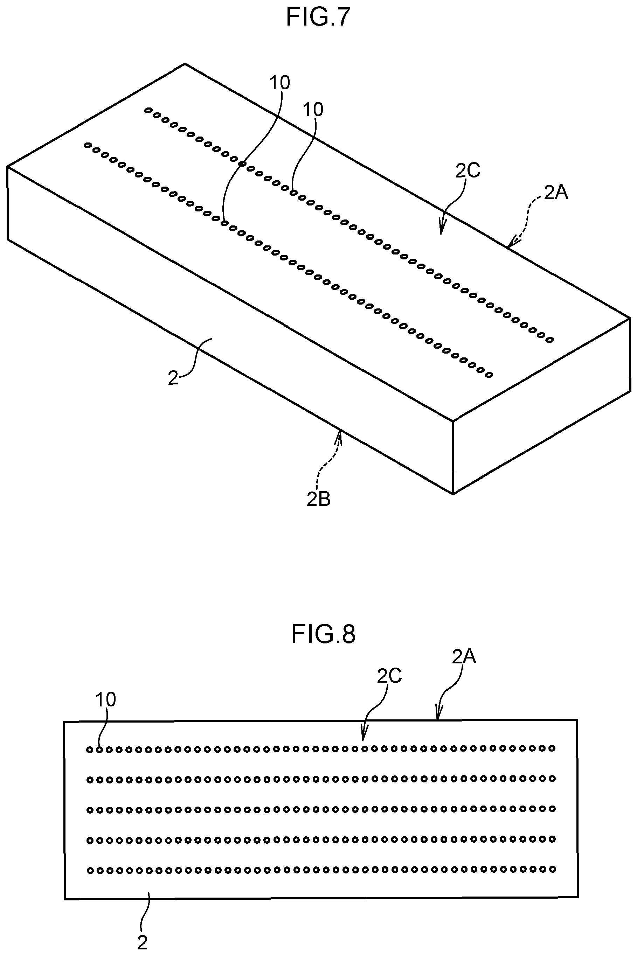

For example, the pair of side faces of the side face member may each have plural holes that are lined-up in one row. Alternatively, as illustrated in Fig. 7, the pair of side faces 2B, 2C of the side face member 2 may each have plural holes 10 that are lined-up in two rows. Alternatively, as illustrated in Fig. 8, the pair of side faces 2B, 2C of the side face member 2 may each have plural holes 10 that are lined-up in three or more rows. Note that, from the standpoint of manifesting a favorable anchoring effect, it is preferable that each of the side faces 2B, 2C has plural holes that are lined-up in two or more rows.

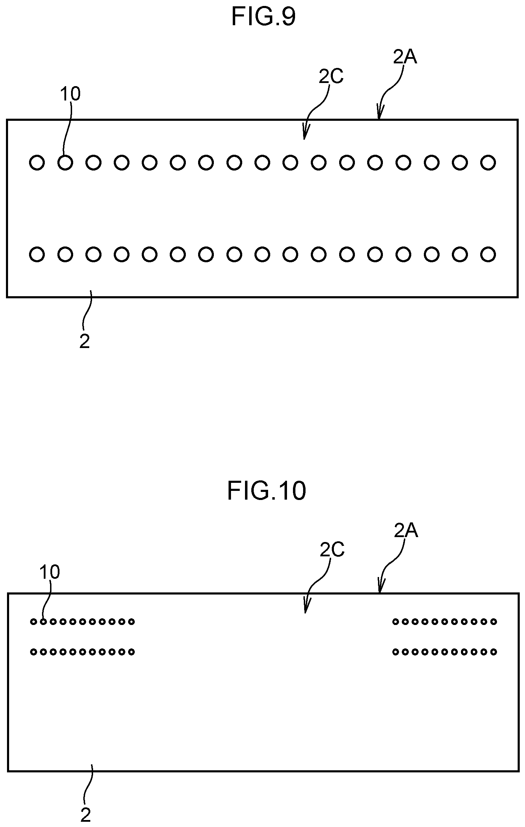

Further, in a case in which there are plural holes that are lined-up in two or more rows, as illustrated in Fig. 9, the holes 10 may be formed uniformly at the joining face 2A side and at the side opposite thereto of each of the pair of side faces 2B, 2C. However, from the standpoint of obtaining a favorable joining performance in the joining step, it is preferable that the holes 10 be formed such that the distribution thereof is concentrated in the joining face 2A side.

Further, the plural holes 10 that are lined-up in one or more rows may be formed uniformly from one end to the other end of each of the pair of side faces 2B, 2C. Alternatively, as illustrated in Fig. 10, the holes 10 may be formed such that the distribution thereof is concentrated in one end portion and the other end portion of each of the pair of side faces 2B, 2C.

Examples of the shape of the holes include a cone shape (a perfect circle cone shape, an oval cone shape or the like), a triangular cone shape (an equilateral triangular cone shape, a right triangular cone shape or the like), and a quadrangular cone shape (a square cone shape, the shape of a cone whose base is rhomboid, the shape of a cone whose base is rectangular, or the like).

From the standpoint of manifesting a favorable anchoring effect, the depth of the holes is preferably from 5 *µ*m to 100 *µ*m, and is more preferably from 10 *µ*m to 50 *µ*m.

Note that the depth of a hole means the distance from the surface of a region, at which the holes do not exist, of the side face of the side face member (either of the pair of side faces of the side face member) to the maximum depth of the hole in the direction orthogonal to that surface.

From the standpoint of manifesting a favorable anchoring effect, the interval between the holes (i.e., the pitch) is preferably from 0.2 mm to 2 mm, and is more preferably from 0.4 mm to 1 mm.

Note that the interval between holes means the distance between the deepest portions of adjacent holes. The distance between the deepest portions of adjacent holes is measure for each of adjacent hole pairs on the pair of side faces of the side face member, and the average value thereof is used as the interval between the holes.

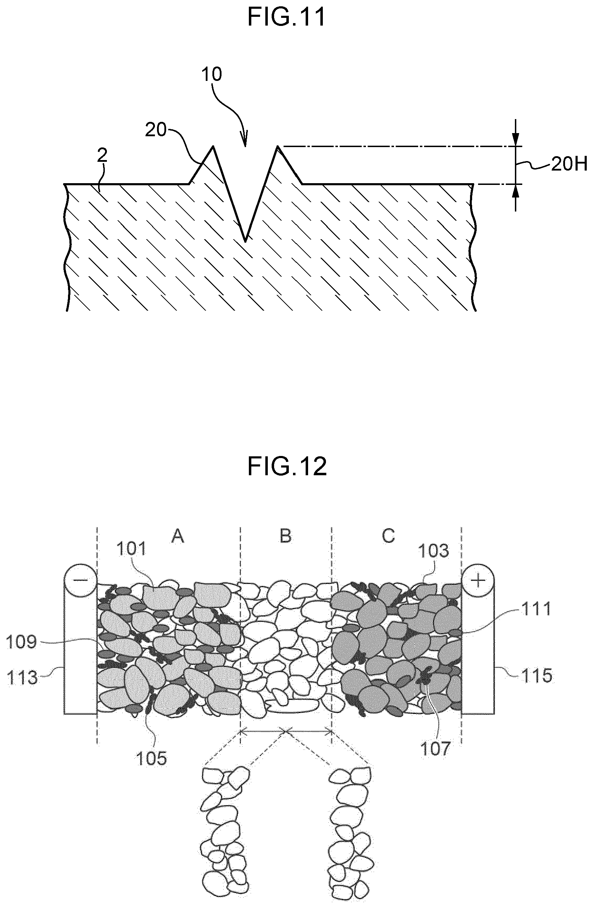

In a case in which the holes 10 are formed in the surfaces of the side face member 2 by the projections of the clamps, as illustrated in Fig. 11, a mound 20 is formed at the edge of the hole 10. The height of the mound 20 at the edge of the hole is preferably less than or equal to 1/2 of the thickness of the resin layer (the tab film or the like). Moreover, in a case in which the laminate sheet has, in addition to a metal layer, a resin layer (a so-called fusible resin layer) at further toward the side face member side than the metal layer, the height of the mound 20 at the edge of the hole is preferably less than or equal to 1/2 of the total thickness of the resin layer (the tab film or the like) and the fusible resin layer of the laminate sheet. Specifically, the height of the mound 20 at the edge of the hole is preferably 40 *µ*m or less, and is more preferably 20 *µ*m or less. On the other hand, the minimum value of the height of the mound 20 at the edge of the hole is not particularly limited, and may be 0 *µ*m or more, or may be 2 *µ*m or more.

Note that the height of the mound 20 at the edge of the hole means distance 20H from the surface of a region at which the holes 10 are not formed on the side face of the side face member 2 (either of the pair of side faces of the side face member 2) to the peak of the mound 20, in the direction orthogonal to that surface.

### <Battery Members>

The respective members that structure the battery of the present disclosure are described next.

### • Laminate Sheet

The laminate sheet in the present disclosure includes at least a metal layer, and preferably includes a fusible resin layer at a face of the metal layer that is closer to the side face member. Further, the laminate sheet may include a protective layer at a face of the metal layer that is farther from the side face member.

Examples of the material of the fusible resin layer include olefin-based resins such as polypropylene (PP) and polyethylene (PE). Examples of the material of the metal layer include aluminum, aluminum alloys and stainless steel. Examples of the material of the protective layer include polyethylene terephthalate (PET) and nylon.

The thickness of the fusible resin layer is, for example, from 40 *µ*m to 100 *µ*m. The thickness of the metal layer is, for example, from 30 *µ*m to 60 *µ*m. The thickness of the protective layer is, for example, from 20 *µ*m to 60 *µ*m. The thickness of the entire laminate sheet is, for example, from 70 *µ*m to 220 *µ*m.

### • Resin Layers (tab films or the like)

The battery of the present disclosure includes resin layers (e.g., tab films) that are disposed on the surfaces of the pair of side faces of the side face member. Each resin layer is provided so as to cover a portion of a surface of the side face member, and so as to be interposed between the side face member and the laminate sheet.

Examples of materials of the resin layers include olefin-based resins such as polypropylene (PP) and polyethylene (PE). The thickness of the resin layer is, for example, from 40 *µ*m to 100 *µ*m.

Here, the thickness of each layer is the average value of values that are measured at 10 freely-selected points.

### • Electrode Body

The electrode body in the present disclosure usually includes a positive electrode current collector, a positive electrode active material layer, an electrolyte layer, a negative electrode active material layer and a negative electrode current collector, in that order in the thickness direction.

The positive electrode active material layer contains at least a positive electrode active material. The positive electrode active material layer may further contain at least one of a conductive material, an electrolyte or a binder. The shape of the positive electrode active material is a particle shape, for example. Examples of the positive electrode active material include oxide active materials. Sulfur (S) is also usable as the positive electrode active material.

The positive electrode active material preferably contains a lithium complex oxide. The lithium complex oxide may contain at least one selected from the group consisting of F, Cl, N, S, Br and I. Further, the lithium complex oxide may have a crystal structure belonging to at least one space group selected from space groups R-3m, Immm, and P63-mmc (also called P63mc or P6/mmc). In the lithium complex oxide, the main sequence of a transition metal, oxygen and lithium may be an O2-type structure.

Examples of lithium complex oxides having a crystal structure belonging to R-3m include compounds expressed by LiₓMe_{y}O*_{α}*X*_{β}* (in which Me represents at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one selected from the group consisting of F, Cl, N, S, Br and I, and 0.5≤x≤1.5, 0.5≤y≤1.0, 1≤*α*<2, 0<*β*≤1 are satisfied).

Examples of lithium complex oxides having a crystal structure belonging to Immm include complex oxides expressed by Liₓ₁M¹A¹₂ (in which 1.5≤x1≤2.3 is satisfied, M¹ includes at least one selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and complex oxides expressed by Liₓ₁M^{1A}₁₋ₓ₂M^{1B}ₓ₂O_{2-y}A²_{y} (in which 0≤x2≤0.5 and 0≤y≤0.3 are satisfied, at least one of x2 or y is not 0, M^{1A} represents at least one selected from the group consisting of Ni, Co, Mn, Cu and Fe, M^{1B} represents at least one selected from the group consisting of Al, Mg, Sc, Ti, Cr, V, Zn, Ga, Zr, Mo, Nb, Ta and W, and A² represents at least one selected from the group consisting of F, Cl, Br, S and P). When A¹ includes at least one element other than oxygen, the at least one element is preferably at least one selected from the group consisting of F, Cl, Br, S and P.

Examples of lithium complex oxides having a crystal structure belonging to P63-mmc include complex oxides expressed by M1ₓM2_{y}O₂ (in which M1 represents an alkali metal (preferably, at least one of Na or K), M2 represents a transition metal (preferably, at least one selected from the group consisting of Mn, Ni, Co and Fe), and x+y satisfies 0<x+y≤2).

Examples of lithium complex oxides having an O2-type structure include complex oxides expressed by Liₓ[Li*_{α}*(MnₐCo_{b}M_{c})_{1-*α*}]O₂ (in which 0.5<x<1.1, 0.1*<α*<0.33*,* 0.17<a<0.93, 0.03<b<0.50, and 0.04<c<0.33 are satisfied, and M represents at least one selected from the group consisting of Ni, Mg, Ti, Fe, Sn, Zr, Nb, Mo, W and Bi). Specific examples include Li_{0.744}[Li_{0.145}Mn_{0.625}Co_{0.115}Ni_{0.115}]O₂.

In addition to the positive electrode active material, the positive electrode preferably contains a solid electrolyte selected from the group of solid electrolytes consisting of sulfide solid electrolytes, oxide solid electrolytes, and halide solid electrolytes. It is more preferable that at least a portion of the surface of the positive electrode active material is coated with a sulfide solid electrolyte, an oxide solid electrolyte or a halide solid electrolyte. Li_{6-(4-x)b}(Ti₁₋ₓAlₓ)_{b}F₆ (0<x<1, 0<b≤1.5) [LTAF electrolyte] is preferable as the halide solid electrolyte for coating at least a portion of the surface of the positive electrode active material.

The conductive material is, for example, a carbon material. The electrolyte may be a solid electrolyte or may be a liquid electrolyte. The solid electrolyte may be an organic solid electrolyte such as a gel electrolyte, or may be an inorganic solid electrolyte such as an oxide solid electrolyte or a sulfide solid electrolyte. A liquid electrolyte (electrolytic solution) includes, for example, a supporting salt such as LiPF₆, and a solvent such as a carbonate solvent. Further, examples of the binder include rubber binders and fluoride binders.

The negative electrode active material layer contains at least a negative electrode active material. The negative electrode active material layer may further contain at least one of a conductive material, an electrolyte, or a binder. Examples of the negative electrode active material include metal active materials such as Li and Si, carbon active materials such as graphite, and oxide active materials such as Li₄Ti₅O₁₂. The shape of the negative electrode current collector is, for example, foil-shaped or mesh-shaped. The conductive material, the electrolyte and the binder are similar to those described above.

The electrolyte layer is disposed between the positive electrode active material layer and the negative electrode active material layer, and contains at least an electrolyte. The electrolyte may be a solid electrolyte or may be a liquid electrolyte. It is preferable that the electrolyte layer be a solid electrolyte layer. The electrolyte layer may include a separator.

The solid electrolyte preferably includes at least one solid electrolyte species selected from the group of solid electrolytes consisting of sulfide solid electrolytes, oxide solid electrolytes and halide solid electrolytes.

The sulfide solid electrolyte preferably contains sulfur (S) as the main anion element, and preferably contains, for example, Li element and element A. Element A is at least one selected from the group consisting of P, As, Sb, Si, Ge, Sn, B, Al, Ga and In. The sulfide solid electrolyte may further contain at least one of O or a halogen element. Examples of the halogen element (X) include F, Cl, Br, and I. The composition of the sulfide solid electrolyte is not particularly limited, and examples thereof include xLi₂S • (100-x)P₂S₅ (70≤x≤80) and yLiI•zLiBr•(100-y-z)(xLi₂S • (1-x)P₂S₅) (0.7≤x≤0.8, 0≤y≤30, 0≤z≤30). The sulfide solid electrolyte may have the composition represented by the following Formula (1).

Li₄₋ₓGe₁₋ₓPₓS₄ (0<x<1) ... Formula (1)

In Formula (1), at least a portion of Ge may be substituted with at least one selected from the group consisting of Sb, Si, Sn, B, Al, Ga, In, Ti, Zr, V and Nb. Further, at least a portion of P may be substituted with at least one selected from the group consisting of Sb, Si, Sn, B, Al, Ga, In, Ti, Zr, V and Nb. A portion of Li may be substituted with at least one selected from the group consisting of Na, K, Mg, Ca and Zn. A portion of S may be substituted with a halogen. The halogen may be at least one of F, Cl, Br or I.

The oxide solid electrolyte preferably contains oxygen (O) as the main anion element, and, for example, may contain Li, element Q (Q represents at least one of Nb, B, Al, Si, P, Ti, Zr, Mo, W or S), and O. Examples of the oxide solid electrolyte include garnet type solid electrolytes, perovskite type solid electrolytes, NASICON type solid electrolytes, Li-P-O type solid electrolytes, and Li-B-O type solid electrolytes. Examples of garnet type solid electrolytes include Li₇La₃Zr₂O₁₂, Li₇₋ₓLa₃(Zr₂₋ₓNbₓ)O₁₂ (0≤x≤2), and Li₅La₃Nb₂O₁₂. Examples of perovskite type solid electrolytes include (Li,La)TiO₃, (Li,La)NbO₃, and (Li,Sr)(Ta,Zr)O₃. Examples of NASICON type solid electrolytes include Li(Al,Ti)(PO₄)₃, and Li(Al,Ga)(PO₄)₃. Examples of Li-P-O type solid electrolytes include Li₃PO₄ and LIPON (compounds in which part of O's in Li₃PO₄ is substituted with N). Examples of LiB-O type solid electrolytes include Li₃BO₃, and compounds in which part of O's in Li₃BO₃ is substituted with C.

As the halide solid electrolyte, a solid electrolyte containing Li, M and X (M representing at least one of Ti, Al or Y, and X representing F, Cl or Br) is suitable. Specifically, Li_{6-3z}Y_{z}X₆ (in which X represents Cl or Br, and z satisfies 0<z<2) and Li_{6-(4-x)b}(Ti₁₋ₓAlₓ)_{b}F₆ (0<x<1, 0<b≤1.5) are preferable. Among Li_{6-3z}Y_{z}X₆, from the standpoint of having excellent lithium ion conductivity, Li₃YX₆ (X representing Cl or Br) is more preferable, and Li₃YCl₆ is even more preferable. Further, from standpoints such as, for example, suppressing oxidative decomposition of the sulfide solid electrolyte, it is preferable that Li_{6-(4-x)b}(Ti₁₋ₓAl_{x)b}F₆ (0<x<1, 0<b≤1.5) be contained together with a solid electrolyte such as a sulfide solid electrolyte.

The positive electrode current collector carries out electric current collection for the positive electrode active material layer. Examples of the material of the positive electrode current collector include stainless steel, aluminum, nickel, iron, titanium, and carbon, and an aluminum alloy foil or an aluminum foil is preferable. The aluminum alloy foil or aluminum foil may be produced using a powder. Examples of the shape of the positive electrode current collector include a foil shape and a mesh shape. The positive electrode current collector may have a positive electrode tab for connection with a positive electrode current collector side face member.

The negative electrode current collector carries out electric current collection for the negative electrode active material layer. Examples of the material of the negative electrode current collector include metals such as copper, SUS, and nickel. Examples of the shape of the negative electrode current collector include a foil shape and a mesh shape. The negative electrode current collector may have a negative electrode tab for connection with a negative electrode current collector side face member.

### • Side Face Member

The side face member in the present disclosure is disposed at a side face of an electrode body. The side face member is, for example, a current collector side face member. A current collector side face member means a side face member that includes a current collector portion at at least a portion thereof. The current collector portion is, for example, electrically connected to a tab of the electrode body. The current collector side face member may have a configuration in which the entire current collector side face member corresponds to a current collector portion, or in which a portion of the current collector side face member corresponds to a current collector portion. Examples of the material of the side face member include metals such as SUS.

The shape of the side face member is not particularly limited, and may be rectangular parallelopiped for example. In a case in which the side face member is rectangular parallelopiped, from the standpoint of volume efficiency, the aspect ratio (As2/As1) is preferably 0.5 or less, and is more preferably 0.3 or less. On the other hand, from the standpoint of ensuring the surface area over which the current collector is joined, the minimum value of the aspect ratio (As2/As1) is preferably 0.1 or more, and is more preferably 0.2 or more.

Note that, as illustrated in Fig. 1, the aspect ratio (As2/As1) means the ratio of a distance (As2) from an side face 2B/2C-side end portion of the joining face 2A of the side face member 2 to an end portion, at the other side (side face 2C/2B-side), of the joining face 2A, relative to a distance (As1) from a joining face 2A-side end portion of the side face 2B or 2C of the side face member 2 to an end portion, at a side opposite to the joining face 2A, of the side face 2B or 2C.

### • Battery Structure

The structure of a solid state battery has a layered structure of positive electrode / solid electrolyte layer / negative electrode. So-called all solid-state batteries, in which a solid electrolyte is used as an electrolyte, are included among solid-state batteries, and the solid electrolyte may contain an electrolytic solution in an amount of less than 10 mass% with respect to the total amount of electrolytes. Note that the solid electrolyte may be a composite solid electrolyte containing an inorganic solid electrolyte and a polymer electrolyte.

The positive electrode includes a positive electrode active material layer and a current collector. The negative electrode includes a negative electrode active material layer and a current collector.

The solid electrolyte layer may have a single layer structure, or may have a multilayer structure of two or more layers.

For example, the solid-state battery may have a cross-sectional structure illustrated in Fig. 12, and solid electrolyte layer B may have a two-layer structure as illustrated in Fig. 12. Fig. 12 is a schematic sectional view illustrating an example of a solid-state battery. The solid-state battery illustrated in Fig. 12 has: a negative electrode including a negative electrode current collector 113 and a negative electrode active material layer A; a solid electrolyte layer B; and a positive electrode including a positive electrode current collector 115 and a positive electrode active material layer C. The negative electrode active material layer A includes a negative electrode active material 101, a conductive aid 105 and a binder 109. The positive electrode active material layer C includes a coated positive electrode active material 103, a conductive aid 107 and a binder 111. In the coated positive electrode active material 103, the surface of a positive electrode active material is coated with an LTAF electrolyte or an LiNbO₃ electrolyte.

Further, the solid-state battery may have a configuration in which the layer-stack edge faces (side faces) of a layered structure of a positive electrode / a solid electrolyte layer / a negative electrode are sealed by a resin. The current collector of the electrode may have a configuration in which a shock-absorbing layer, an elastic layer or a PTC (Positive Temperature Coefficient) thermistor layer is disposed on a surface of the current collector.

### • Battery

The battery of the present disclosure is typically a lithium ion secondary battery. An example of the use of the battery is the power source of a vehicle such as a hybrid vehicle (HEV), a plug-in hybrid vehicle (PHEV), an electric vehicle (BEV), a gasoline-powered vehicle, or a diesel-powered vehicle. The battery is particularly preferably used as the power source for driving of a hybrid vehicle (HEV), a plug-in hybrid vehicle (PHEV) or a battery electric vehicle (BEV). Further, the battery of the present disclosure may be used as the power source of a moving body other than a vehicle (e.g., a train, a boat, an airplane), or may be used as the power source of an electric product such as an information processing device.

The present disclosure is not limited to the above-described embodiments. The above embodiments are illustrative, and any embodiment that has substantially the same configuration as, and exhibit an operation and an effect similar to, the technical concepts put forth in the claims in the present disclosure are included in the technical scope of the present disclosure.

The effects of the battery according to the present disclosure were confirmed by experimentation, as described below.

### • Comparative Example 1

First, as illustrated in the structure shown in Fig. 1, tab films 4 were placed so as to cover portions of the surfaces of a pair of side faces 2B, 2C of a side face member 2, and an end portion of a current collector 6 was disposed so as to contact a joining face 2A of the side face member 2. Next, as illustrated in Fig. 6, a horn 12 was pushed against the current collector 6. An anvil 16 was pushed against a surface, which was at a side opposite the joining face, of the side face member 2, and a pair of clamps 24 were pushed against the tab films 4 provided on the pair of side faces 2B, 2C of the side face member 2, to grasp the side face member 2. Clamps of which surfaces to be pushed against the tab films 4 were flat were used as the clamps 24. Then, ultrasonic vibrations were applied from the horn 12, thereby joining the end portion of the current collector 6 to the joining face of the side face member 2 (joining step).

Next, as illustrated in Fig. 4, a laminate sheet 8 was disposed so as to cover the electrode body (not illustrated) and portions of the side face member 2. Then, heating was carried out while a pair of heating bars 18 were pushed against the laminate sheet 8 on the tab films 4 on the pair of side faces 2B, 2C of the side face member 2, and the laminate sheet 8 was thereby thermally fused to the side face member 2 with the tab films 4 disposed therebetween (thermal fusing step). A battery was produced in this way.

### • Reference Example 1

A battery was produced in the same manner as that in Comparative Example 1, except that the tab films were not used, and, in the joining step, joining was carried out by pushing the pair of clamps 24 directly against the pair of side faces 2B, 2C of the side face member 2.

### • Example 1

A battery was produced in the same manner as that in Comparative Example 1, except that the following changes from Comparative Example 1 were made.

As illustrated in Fig. 2, clamps 14, which had projections on the surfaces to be pushed against the tab films 4, were used as the clamps in the joining step. Further, at the time of grasping the side face member 2 by the clamps 14, pressure was applied in the directions of arrow 14A and arrow 14B respectively, and grasping was carried out such that the projections 140 of the clamps 14 penetrated through the tab films 4, and holes were formed in the surfaces of the pair of side faces 2B, 2C of the side face member 2 by the projections 140 of the clamps 14. Therefore, as illustrated in Fig. 3, the side face member 2 after the joining step had plural holes 10 in the surfaces of the pair of side faces 2B, 2C. Thereafter, in the thermal fusing step, the resin of the tab films 4, which melted due to the heat from the heating bars 18, flowed into the holes 10 present on the pair of side faces 2B, 2C of the side face member 2.

The projections provided on the clamps were as follows.
- lined-up in two rows at surfaces of the clamps that are to contact the tab films,
- shape of projection: cone shaped
- height of projection: 1000 *µ*m
- interval between projections (pitch): 2 mm

Further, the holes formed in the side face member were as follows.
- lined-up in two rows at the pair of side faces of the side face member
- shape of holes: cone shaped
- depth of holes: 15 *µ*m
- interval between holes (pitch): 2 mm
- height of mound at hole edge: 5 *µ*m

### • Evaluation of Joining Performance

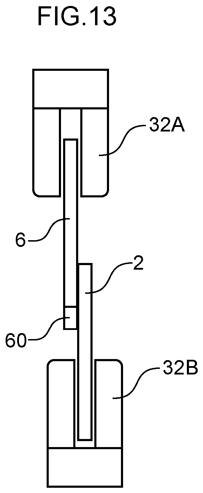

The joining strength of a current collector and the joining face of the side face member was measured by the following method at the batteries of Comparative Example 1, Reference Example 1 and Example 1. By using a tensile tester illustrated in Fig. 13, the current collector (current collector in which 60 current collector foils were layered) 6 and the side face member 2 were clamped by an upper chuck 32A and a lower chuck 32B, respectively. A tensile test was carried out at a pulling speed of 5 mm/s by pulling in a direction to apply a shear stress to the joining face at which a joining portion 60 of the current collector 6 was joined to the side face member 2, and the joining strength (N) was determined.

**Table 1**

| | Comp.Ex.1 | Ref.Ex.1 | Ex.1 |
|---|---|---|---|
| Tab Film | Present | Absent | Present |
| Clamp Shape | Flat | Flat | With Projections |
| Joining Strength | 10 to 150 N | 200 to 250 N | 200 to 250 N |
| Height of Mound at Hole Edge | 0 *µ*m | 0 *µ*m | 5 *µ*m |

As illustrated in Table 1, it can be understood that, in Example 1, in which the side face member was grasped by using clamps having projections such that the projections penetrated through the tab films and made holes in surfaces of the side face member, an excellent j oining performance was obtained as compared with Comparative Example 1, in which clamps having flat shapes were used.

## Claims

1. A method of producing a battery that includes:
an electrode body including a current collector (6);
a side face member (2) including a terminal and disposed at a side face of the electrode body, the side face member (2) having a joining face (2A) that is ultrasonically joined to the current collector (6), and a pair of side faces (2B, 2C) adjacent to the joining face (2A) ; and
resin layers (4) disposed at surfaces of the pair of side faces (2B, 2C) of the side face member (2),
the method comprising a joining step of ultrasonically joining the current collector (6) to the joining face (2A) of the side face member (2),
wherein the joining step includes performing ultrasonic joining while grasping, via the resin layers (4), the pair of side faces (2B, 2C) of the side face member (2) by a pair of clamps (14) ,
**characterised in that** said pair of clamps (14) has a plurality of projections (140), and
the grasping is carried out such that the projections (140) of the clamps (14) penetrate through the resin layers (4) and contact the pair of side faces(2B, 2C) .

2. The method of producing a battery according to claim 1, wherein
the battery includes a laminate sheet (8) covering the electrode body and the side face member (2),
the grasping in the joining step includes forming holes in the surfaces of the pair of side faces (2B, 2C) by the projections (140) of the clamps (14),
the method further comprises, after the joining step, a thermal fusing step of thermally fusing the laminate sheet (8) to the side face member (2), and
a resin of the resin layers (4) penetrates into the holes after the thermal fusing step.

3. The method of producing a battery according to claim 1 or 2, wherein the plurality of projections (140) have a height of from 100 *µ*m to 2000 *µ*m.

4. A battery comprising:
an electrode body including a current collector (6);
a side face member (2) including a terminal and disposed at a side face of the electrode body, the side face member (2) having a joining face (2A) that is ultrasonically joined to the current collector (6), and a pair of side faces (2B, 2C) adjacent to the joining face (2A) ;
resin layers (4) disposed at surfaces of the pair of side faces (2B, 2C) of the side face member (2); and
a laminate sheet (8) covering the electrode body and the side face member (2), and thermally fused to the side face member (2),
**characterised in that**
the side face member (2) has a plurality of holes (10) in the pair of side faces (2B, 2C), and a resin of the resin layers (4) penetrates into the holes.

5. The battery according to claim 4, wherein the plurality of holes have a depth of from 5 *µ*m to 100 *µ*m.

## Patentansprüche

1. Verfahren zum Herstellen einer Batterie, die Folgendes umfasst:
einen Elektrodenkörper, der einen Stromabnehmer (6) umfasst;
ein Seitenflächenelement (2), das einen Anschluss umfasst und an einer Seitenfläche des Elektrodenkörpers angeordnet ist, wobei das Seitenflächenelement (2) eine Verbindungsfläche (2A) aufweist, die mit dem Stromabnehmer (6) durch Ultraschall verbunden ist, und ein Paar Seitenflächen (2B, 2C) benachbart zu der Verbindungsfläche (2A); und
Harzschichten (4), die an Oberflächen des Paares Seitenflächen (2B, 2C) des Seitenflächenelements (2) angeordnet sind,
wobei das Verfahren einen Verbindungsschritt umfasst, bei dem der Stromabnehmer (6) mit der Verbindungsfläche (2A) des Seitenflächenelements (2) durch Ultraschall verbunden wird,
wobei der Verbindungsschritt Durchführen von Verbinden durch Ultraschall umfasst, während das Paar Seitenflächen (2B, 2C) des Seitenflächenelements (2) durch ein Paar Klammern (14) über die Harzschichten (4) gegriffen wird, **dadurch gekennzeichnet, dass** das Paar Klammern (14) eine Vielzahl von Vorsprüngen (140) aufweist, und
das Greifen so durchgeführt wird, dass die Vorsprünge (140) der Klammern (14) die Harzschichten (4) durchdringen und das Paar Seitenflächen (2B, 2C) kontaktieren.

2. Verfahren zum Herstellen einer Batterie nach Anspruch **1,** wobei
die Batterie eine Laminatplatte (8) umfasst, die den Elektrodenkörper und das Seitenflächenelement (2) bedeckt,
das Greifen in dem Verbindungsschritt Ausbilden von Löchern in den Oberflächen des Paares Seitenflächen (2B, 2C) durch die Vorsprünge (140) der Klammern (14) umfasst, das Verfahren weiterhin nach dem Verbindungsschritt einen thermischen Verschweißschritt umfasst, bei dem die Laminatplatte (8) mit dem Seitenflächenelement (2) thermisch verschweißt wird, und
ein Harz der Harzschichten (4) nach dem thermischen Verschweißschritt in die Löcher eindringt.

3. Verfahren zum Herstellen einer Batterie nach Anspruch 1 oder 2, wobei die Vielzahl von Vorsprüngen (140) eine Höhe von 100 *µ*m bis 2000 *µ*m aufweisen.

4. Batterie, Folgendes umfassend:
einen Elektrodenkörper, der einen Stromabnehmer (6) umfasst;
ein Seitenflächenelement (2), das einen Anschluss umfasst und an einer Seitenfläche des Elektrodenkörpers angeordnet ist, wobei das Seitenflächenelement (2) eine Verbindungsfläche (2A) aufweist, die mit dem Stromabnehmer (6) durch Ultraschall verbunden ist, und ein Paar Seitenflächen (2B, 2C) benachbart zu der Verbindungsfläche (2A);
Harzschichten (4), die an Oberflächen des Paares Seitenflächen (2B, 2C) des Seitenflächenelements (2) angeordnet sind; und
eine Laminatplatte (8), die den Elektrodenkörper und das Seitenflächenelement (2) bedeckt und thermisch mit dem Seitenflächenelement (2) verschweißt ist,
**dadurch gekennzeichnet, dass** das Seitenflächenelement (2) eine Vielzahl von Löchern (10) in dem Paar Seitenflächen (2B, 2C) aufweist und ein Harz der Harzschichten (4) in die Löcher eindringt.

5. Batterie nach Anspruch 4, wobei die Vielzahl von Löchern eine Tiefe von 5 *µ*m bis 100 *µ*m aufweisen.

## Revendications

1. Procédé de production d'une batterie qui comporte :
un corps d'électrode comportant un collecteur de courant (6) ;
un élément de face interne (2) comportant une borne et disposé sur une face interne du corps d'électrode, l'élément de face interne (2) ayant une face d'assemblage (2A) qui est assemblée par ultrasons au collecteur de courant (6), et une paire de faces latérales (2B, 2C) adjacentes à la face d'assemblage (2A) ; et
des couches de résine (4) disposées au niveau de surfaces de la paire de faces latérales (2B, 2C) de l'élément de face interne (2),
le procédé comprenant une étape d'assemblage consistant à assembler par ultrasons le collecteur de courant (6) à la face d'assemblage (2A) de l'élément de face interne (2),
dans lequel l'étape d'assemblage comporte la réalisation d'un assemblage par ultrasons simultanément à la saisie, par le biais des couches de résine (4), de la paire de faces latérales (2B, 2C) de l'élément de face interne (2) par une paire de pinces (14), **caractérisé en ce que** ladite paire de pinces (14) a une pluralité de saillies (140), et
la saisie est réalisée de telle sorte que les saillies (140) des pinces (14) pénètrent à travers les couches de résine (4) et entrent en contact avec la paire de faces latérales (2B, 2C).

2. Procédé de production d'une batterie selon la revendication 1, dans lequel
la batterie comporte une feuille stratifiée (8) recouvrant le corps d'électrode et l'élément de face interne (2),
la saisie à l'étape d'assemblage comporte la formation de trous dans les surfaces de la paire de faces latérales (2B, 2C) par les saillies (140) des pinces (14),
le procédé comprend en outre, après l'étape d'assemblage, une étape de fusionnement thermique de la feuille stratifiée (8) à l'élément de face interne (2), et
une résine des couches de résine (4) pénètre à l'intérieur des trous après l'étape de fusionnement thermique.

3. Procédé de production d'une batterie selon la revendication 1 ou 2, dans lequel la pluralité de saillies (140) ont une hauteur allant de 100 *µ*m à 2000 *µ*m.

4. Batterie comprenant :
un corps d'électrode comportant un collecteur de courant (6) ;
un élément de face interne (2) comportant une borne et disposé sur une face interne du corps d'électrode, l'élément de face interne (2) ayant une face d'assemblage (2A) qui est assemblée par ultrasons au collecteur de courant (6), et une paire de faces latérales (2B, 2C) adjacentes à la face d'assemblage (2A) ;
des couches de résine (4) disposées au niveau de surfaces de la paire de faces latérales (2B, 2C) de l'élément de face interne (2) ; et
une feuille stratifiée (8) recouvrant le corps d'électrode et l'élément de face interne (2), et fusionnée thermiquement à l'élément de face interne (2), **caractérisée en ce que** l'élément de face interne (2) a une pluralité de trous (10) dans la paire de faces latérales (2B, 2C), et une résine des couches de résine (4) pénètre à l'intérieur des trous.

5. Batterie selon la revendication 4, dans laquelle la pluralité de trous ont une profondeur allant de 5 *µ*m à 100 *µ*m.
